(19) Europäisches Patentamt
European Patent Office
Office européen des brevets

(11) **EP 4 553 058 A1**

(12) **EUROPÄISCHE PATENTANMELDUNG**

(43) Veröffentlichungstag:
**14.05.2025  Patentblatt 2025/20**

(21) Anmeldenummer: 23209141.3

(22) Anmeldetag: **10.11.2023**

(51) Internationale Patentklassifikation (IPC):
*C04B 35/593* (2006.01)     *C04B 35/626* (2006.01)
*C04B 35/634* (2006.01)

(52) Gemeinsame Patentklassifikation (CPC):
**C04B 35/5935; C04B 35/6261; C04B 35/62655;
C04B 35/62695; C04B 35/63416;** C04B 2235/3206;
C04B 2235/3225; C04B 2235/3244;
C04B 2235/3878; C04B 2235/3882;
C04B 2235/5409; C04B 2235/5463;
C04B 2235/6025; C04B 2235/608; C04B 2235/767;
(Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **CeramTec GmbH**
**73207 Plochingen (DE)**

(72) Erfinder:
• **DIETRICH, Volker**
**68623 Lampertheim (DE)**
• **SCHARRER, Michael**
**91207 Lauf (DE)**
• **STAHL, Moritz**
**72622 Nürtingen (DE)**

(54) **SINTERFORMKÖRPER AUF BASIS VON SILIZIUMNITRID**

(57)    Sinterformkörper auf der Basis von Siliziumnitrid, umfassend Siliziumnitrid (beta-$Si_3N_4$), und 0,2Ma. % bis 3,0Ma. % Magnesium, 3,0Ma. % bis 8,5Ma. % Yttrium und 1,2Ma. % bis 4,0Ma. % Zirconium. Wobei das Ma. %-Verhältnis von Mg + Zr / Y zwischen 0,3 und 2,0 liegt und der Sinterformkörper eine theoretische Enddichte >98%, eine Festigkeit >550MPa und eine Temperaturleitfähigkeit >20mm^2/s aufweist, sowie ein Verfahren zur Herstellung des erfindungsgemäßen Sinterformkörpers.

(52) Gemeinsame Patentklassifikation (CPC): (Forts.)
C04B 2235/77; C04B 2235/96

**Beschreibung**

Die Erfindung betrifft einen Sinterformkörper auf Basis von Siliziumnitrid, der neben Siliziumnitrid (beta-$Si_3N_4$), Anteile an Yttriumoxid ($Y_2O_3$), Magnesiumoxid (MgO) und Zirconiumdioxid ($ZrO_2$) aufweist, sowie ein Verfahren zur Herstellung desselben, und dessen Verwendung.

Sinterformkörper auf der Basis von Siliziumnitrid sind allgemein bekannt und werden in den unter- schiedlichsten Bereichen eingesetzt. Ein Einsatzbereich für solche Sinterformkörper sind Substrate für Leistungselektroniken. Eingesetzt werden derartige Substrate mit einer elektrisch leitfähigen Metallisierungsschicht und elektrisch isolierenden Eigenschaften, wie beispielsweise Keramiken aus AlN, $Al_2O_3$, ZTA (Zirconiumdioxid verstärktes Aluminiumoxid) oder BeO.

Im Bereich der Leistungselektronik werden hauptsächlich Substrate aus $Al_2O_3$, ZTA, und AlN eingesetzt. Berylliumoxid ist wegen der Toxizität seiner Stäube für Spezialanwendungen interessant. AlN besitzt eine hohe Wärmeleitfähigkeit von 180-220 W/mK, allerdings weist es eine für viele Anwendungen zu geringe Festigkeit von etwa 400 MPa auf. Des Weiteren zeigen viele AlN-Substrate eine schlechtere Temperaturwechselbeständigkeit, was sich insbesondere negativ auf die Lebensdauer von metallbeschichteten keramischen Leiterplatten, wie DCB (direct copper bonded) oder AMB (active metal brazing) Substraten, auswirkt. Substrate aus $Al_2O_3$ sind preiswert, haben aber gegenüber AlN den Nachteil einer geringeren Wärmeleitfähigkeit von 19-30 W/mK. Auch Substrate aus ZTA weisen mit Festigkeiten von etwa 600 MPa und Wärmeleitfähigkeiten von 20 bis 26 W/mK zwar im Vergleich zu AlN-Substarten deutlich höhere Festigkeiten, aber auch deutlich geringere Wärmeleitfähigkeiten auf.

Bauteile auf Basis von Siliziumnitrid erreichen eine hohe mechanische Festigkeit, auch bei höheren Temperaturen, eine hohe Bruchzähigkeit und eine hohe Temperaturwechselbeständigkeit. Herkömmlichen $Si_3N_4$-Keramikbauteilen werden als Sinteradditive üblicherweise $Y_2O_3$ und $Al_2O_3$ zugesetzt. Allerdings weisen diese Bauteile geringe Wärmeleitfähigkeiten von unter 30 W/mK auf. Die Herstellung von Bauteilen aus $Si_3N_4$ (Siliziumnitrid) ist im Allgemeinen kostenintensiv, vor allem die Formgebung mit dem Ziel einer möglichst hohen Packungsdichte der anorganischen Rohstoffe stellt eine Herausforderung für den wirtschaftlichen Herstellprozess von Substraten aus Siliziumnitrid dar. Übliche Verfahren wie axiales oder isostatische Pressen sind für große Flächen bei gleichzeitig geringer Dicke der Substrate herausfordernd. Daher sind herkömmliche Siliziumnitridsinterkörper für elektronische Materialien, wie z.B. Halbleitersubstrate ungeeignet, da sie kaum einen Vorteil für Anwendungen in der Leistungselektronik gegenüber den bekannten Werkstoffen wie ZTA, AlN und $Al_2O_3$ aufweisen.

Betrachtet man die Sinterverfahren so liegen die Nachteile des Heißpressens darin, dass nur einfache Formen möglich sind und pro Sinterzyklus nur wenige Bauteile gesintert werden können. Hauptsächlich wird dieses Verfahren zu Forschungszwecken und für Kleinserien mit einfacher Geometrie verwendet. Beim HIP-Prozess (heiß-isostatisches Pressen) sind Temperaturen bis zu 2000°C und hohe Sickstoffpartialdrücke bis 2000 bar üblich. Dadurch sind komplexere Formen möglich, allerdings sind die Sinterkosten sehr hoch.

Der vorliegenden Erfindung liegt nun die Aufgabe zugrunde, einen Sinterformkörper auf Basis von Siliziumnitrid zu erhalten, der eine hohe mechanische Festigkeit, eine hohe Biegefestigkeit, eine sehr gute Temperaturwechselbeständigkeit und eine hohe Temperaturleitfähigkeit aufweist. Zusätzlich sollte es möglich sein, diesen Sinterformkörper in einem einfachen Verfahren herzustellen.

Diese Aufgabe konnte durch einen Sinterformkörper gemäß Anspruch 1 und das Verfahren gemäß Anspruch 8 gelöst werden. Die Unteransprüche weisen bevorzugte Ausgestaltungen auf.

Anorganischer Rohstoffversatz beschreibt die Zusammensetzung einer Mischung der anorganischen Rohstoffe. Die anorganischen Rohstoffe sind Siliziumnitrid (Si3N4) und die Sinteradditive. Sinteradditive sind vorliegend Magnesium (Mg), Yttrium (Y), und Zirconium (Zr) sowie deren Verbindungen.

Bei der theoretische Enddichte handelt es sich um eine Dichte für den Sinterformkörper, die aus den Dichten der Sinteradditive und der Dichte von beta-Siliziumnitrid berechnet wird. Die Dichten der Sinteradditive und von beta-Siliziumnitrid werden entsprechend ihrer Masseprozent-Anteile berücksichtigt. Da im Sinterformkörper neue Phasen mit von den Edukten abweichenden Dichten gebildet werden können, kann die theoretische Enddichte auch >100% betragen.

Als Korngrenzphase wird die Phase im Gefüge des Siliziumnitrid-Sinterformkörpers bezeichnet, welche aus den Sinteradditiven und dem im Siliziumnitrid-Rohstoff enthaltenen $SiO_2$, sowie in den Rohstoffen enthaltene oder im Herstellprozess eingebrachte Verunreinigungen besteht und in der die beta-Siliziumnitrid-Nadeln eingebettet sind. Die Korngrenzphase kann amorph oder amorph und zum Teil kristallin vorliegen.

Die Berechnung der Masseprozent-Anteile (Ma. %) der anorganischen Bestandteile erfolgt in Bezug auf die Gesamtmasse des Sinterformkörpers. Vorhandenes Mg wird als MgO, Y als $Y_2O_3$ und Zr als $ZrO_2$ angenommen und jeglichen Berechnungen zugrunde gelegt.

Als Schlicker wird eine dispergierte Mischung aus organischen Hilfsmitteln und den anorganischen Rohstoffen in einem Lösungsmittel bzw. Lösungsmittelgemisch bezeichnet.

Organische Hilfsmittel sind unter anderem Dispergatoren, Binder und Lösemittel. Als Folie wird der Grünkörper nach dem Vergießen des Schlickers und Entfernen des Lösemittels bzw. Lösemittelgemisches bezeichnet.

Die Gründichte der Folie (GD(F)) bezeichnet die berechnete Dichte des Grünkörpers umfassend die organischen und anorganischen Bestandteile. Zur Berechnung der Gründichte der anorganischen Rohstoffe (GD(A)) wird der volumetrische Anteil an organischen Additiven von GD(F) abgezogen.

Aus der Folie entsteht der Sinterformkörper durch ein- oder mehrstufige Wärmebehandlung. Der Sinterformkörper enthält keine organischen Hilfsmittel.

Die Bestimmung der Eigenschaften der erfindungsgemäßen Sinterformkörper erfolgte wie nachfolgend beschrieben. Die Ermittlung der Festigkeit wurde nach DIN EN 843 durchgeführt, allerdings lag die Dicke der Proben zwischen 0,25mm und 0,4mm. Biegebruchstäbchen wurden gemäß ISO 14704 untersucht und die 3-Punkt-Biegefestigkeit ermittelt. Die Messung der Gründichte erfolgte geometrisch anhand folgender Formel:

$$D = m/V$$

Wobei gilt: D - Dichte, m - Masse, V - Volumen

Die Enddichte der Sinterformkörper wurde basierend auf dem archimedischen Prinzip nach DIN EN ISO 1183-1 bestimmt.

Zur Messung der Temperaturleitfähigkeit wurden die Proben wie in DIN EN 821-1 beschrieben mit Kohlenstoff beschichtet und mittels Laser-Flash-Verfahren analysiert.

Die Messung der Temperaturleitfähigkeit wird im Fall von Siliziumnitrid-Sinterformkörpern der Berechnung der Wärmeleitfähigkeit vorgezogen, da der Wert direkt an den Sinterformkörpern ermittelt werden kann. Die Wärmeleitfähigkeit ist definiert als:

$$\lambda = \alpha*D*c$$

Wobei gilt: $\lambda$ - Wärmeleitfähigkeit; $\alpha$ - Temperaturleitfähigkeit; c - spezifische Wärmekapazität.

Als Betrag für die spezifische Wärmekapazität kann entweder ein unter Berücksichtigung der Einwaage errechneter Wert aus den verwendeten Additiven und beta-Siliziumnitrid, oder ein mittels z.B. Differentialkalorimetrie oder Differentialthermoanalyse an einem separaten Sinterformkörper, geometrisch abweichend von den erfindungsgemäßen Sinterformkörpern, gemessener Wert verwendet werden. Beides ist jedoch fehlerbehaftet, da bei dem berechneten Wert die Phasen im Sinterformkörper nicht mehr in Form der Edukte vorliegen. $Y_2O_3$ liegt beispielsweise nicht mehr als kristallines Sesquioxid vor. Im Sinterformkörper werden neue amorphe und/oder kristalline Phasen gebildet, die gegenüber den Edukten abweichende spezifische Wärmekapazitäten aufweisen. Da sowohl die Messung des spezifischen Widerstandes mit einem Messfehler behaftet ist als auch die separaten Sinterformkörper für die Analyse ein anderes Oberflächen- zu Volumen-Verhältnis aufweisen wie die zu untersuchenden Substrat-Sinterformkörper, erhält man bei der Berechnung der spezifischen Wärmekapazität voneinander abweichende Werte je nach ausgewählter Methode.

Der erfindungsgemäße Sinterformkörper umfasst neben beta-Siliziumnitrid (beta-$Si_3N_4$,), 0,2Ma. % bis 3,0Ma. % Magnesium (Mg) 3,0Ma. % bis 8,5Ma. % Yttrium (Y) und 1,2Ma. % bis 4,0Ma. % Zirconium (Zr). Bevorzugt ergeben die Bestandteile 100Ma. %. Magnesium (Mg) liegt bevorzugt vollständig amorph in der Korngrenzphase des erfindungsgemäßen Siliziumnitrid-Sinterformkörpers vor. Yttrium (Y) und Zirconium (Zr) liegen ebenfalls amorph oder teilkristallin in der Korngrenzphase des erfindungsgemäßen Siliziumnitrid-Sinterformkörpers vor, bilden in einer bevorzugten Ausgestaltung jedoch zumindest teilweise eine weitere kristalline Phase umfassend $Y_2Zr_2O_7$, $Y_3Zr_4O_{12}$ und/oder $Y_{0,82}Zr_{0,18}O_{1,91}$. Diese bewirkt zum einen, dass sich während des Sinterns der einzelnen Folien an der Oberfläche keine kubische Mischphase Zr (C, N) bildet, welche die Durchschlagfestigkeit der Siliziumnitrid-Sinterformkörper drastisch reduziert und den Sinterformkörper für einen Einsatz als isolierender Substratkörper für die Leistungselektronik ungeeignet macht. Zum anderen wird durch die zusätzliche kristalline Phase die Wärmeleitfähigkeit im Vergleich zu Substraten mit den rein amorph vorliegenden Sinteradditiven Yttrium (Y) und Zirconium (Zr) erhöht.

In einer erfindungsgemäßen Ausführungsform enthält der Siliziumnitrid-Sinterformkörpers neben beta-Siliziumnitrid die Sinteradditive Mg, Y, und Zr in den folgenden Mengen: 0,2Ma. % bis 3,0Ma. % Mg (berechnet als MgO), 3,0Ma. % bis 8,5Ma. % Y (berechnet als $Y_2O_3$) und 1,2Ma. % bis 4,0Ma. % Zr (berechnet als $ZrO_2$). Bevorzugt umfasst der Sinterformkörper 0,25Ma. % bis 0,3Ma. % Mg, 7,5Ma. % bis 8,0Ma. % Y und 1,4Ma. % bis 3,5Ma. % $ZrO_2$, besonders bevorzugt 1,75Ma. % bis 2,5Ma. % MgO, 3,0Ma. % bis 4,0Ma. % $Y_2O_3$ und 1,3Ma. % bis 3,0Ma. % Zr. Die Mengenangabe der Sinteradditive beziehen sich auf die Gesamtmasse des Siliziumnitrid-Sinterformkörpers. In einer bevorzugten Ausführungsform umfasst der erfindungsgemäße Siliziumnitrid-Sinterformkörpers neben den Sinteradditiven nur beta-Siliziumnitrid.

In einer bevorzugten Ausgestaltung weist der Sinterformkörper ein Ma. %-Verhältnis von Mg + Zr / Y zwischen 0,3 und 2,0, bevorzugt zwischen 0,4 und 1,75, besonders bevorzugt zwischen 0,5 und 1,5 auf. Enthält der erfindungsgemäße Sinterformkörper Sinteradditive in einem Ma. %-Verhältnis von Mg + Zr / Y von < 0,3, so ist die Sinteraktivität der Rohstoffmischung zu gering, um mit wirtschaftlichen Prozessen einen erfindungsgemäßen Siliziumnitrid-Sinterformkörper mit hoher Festigkeit herzustellen. Dies ist darauf zurückzuführen, dass die Enddichte der Sinterformkörper in Bezug zur theoretischen Enddichte zu gering ist. Enthält der erfindungsgemäße Sinterformkörper Sinteradditive in einem Ma. %-Verhältnis von Mg + Zr / Y von > 2,0, so werden geringe Festigkeiten und/oder eine geringe Temperaturleitfähigkeit erzielt, da der hohe Mg-Gehalt zur Bildung von einem erhöhten Anteil an amorpher Korngrenzphase führt.

In einer Ausgestaltung weist der Siliziumnitrid-Sinterformkörper eine Enddichte > 98,0%, bevorzugt > 98,5%, besonders bevorzugt > 99,0% der theoretischen Enddichte auf um die erfindungsgemäßen Eigenschaften wie die hohe Festigkeit und die hohe Temperaturleitfähigkeit zu realisieren.

Bei dem erfindungsgemäßen Siliziumnitrid-Sinterformkörper handelt es sich in einer Ausgestaltung um ein beta-$Si_3N_4$-Bauteil mit einer Temperaturleitfähigkeit > 20 mm^2/s, bevorzugt > 25 mm^2/s, besonders bevorzugt > 30 mm^2/s, Biegefestigkeit > 550 MPa, bevorzugt > 600 MPa, besonders bevorzugt > 640 MPa, hohem spezifischen Durchgangs-widerstand $\rho1$ zwischen $2,0\times10$^15$\Omega$cm und $6,0\times10$^15$\Omega$cm bei 25°C und 1000V sowie einem spezifischen Durch-gangswiderstand $\rho2$ zwischen $3,5\times10$^13$\Omega$cm und $8,0\times10$^13$\Omega$cm bei 250°C und 1000V, sowie einem Verhältnis $\rho2/\rho1$ < 0,2, und einer elektrischen Durchschlagsfestigkeit > 18 kV/mm.

Erfindungsgemäß erfolgt die Herstellung des Sinterformkörpers über ein Foliengießverfahren.

Das Foliengießen ist für die Bauteildimensionen von Substraten, d.h. dünne, flächige Formate mit Seitenlängen von z.B. 5-14 cm * 5-19 cm und einer Dicke von 0,1-1 mm ein geeignetes Verfahren. Es hat jedoch den Nachteil, dass eine hohe Packungsdichte der anorganischen Bestandteile aufgrund der benötigten Menge an organischen Hilfsstoffen nur mittels Nachverdichten realisiert werden kann. Die geringe Packungsdichte der anorganischen Bestandteile wirkt sich negativ auf die Sinteraktivität der Folien aus. Die geringe Sinteraktivität muss üblicherweise durch eine höhere Sintertemperatur > 1900 °C, verbunden mit einem Stickstoffpartialdruck > 50 bar und Haltezeiten > 1,5 Stunden ausgeglichen werden, um dichte, d.h. nahezu porenfreie, Bauteile zu erhalten. Eine alternative Möglichkeit die geringere Sinteraktivität auszugleichen, besteht darin, den Anteil an Sinteradditiven, insbesondere Mg, zu erhöhen. Dies ergibt ein Verhältnis Mg + Zr / Y von > 2,0 mit den oben beschriebenen, nachteiligen Folgen.

Um den Sinterformkörper zu erzeugen, wird eine Rohstoffzusammensetzung, die als anorganische Bestandteile neben Siliziumnitrid ($Si_3N_4$) auch Anteile an Yttriumoxid ($Y_2O_3$), Magnesiumoxid (MgO) und/oder Magnesiumhydroxid (Mg $(OH)_2$) und/oder Magnesiumcarbonat (MgCos) sowie Zirkoniumdioxid ($ZrO_2$) umfasst, verwendet. Die anorgani-schen Rohstoffe werden in einem organischen Lösemittel oder einem organischen Lösemittelgemisch (z.B. Alkohol/-Keton, Alkohol/Aromat) dispergiert. Als weitere organische Komponenten können der Rohstoffmischung weitere Komponenten wie Dispergatoren (z.B. Fettsäureester oder Polyacrylate), Bindemittel (z.B. Polyvinylbutyrale, Polyvinylalkohole) und Weichmacher (z.B. Phtalate, Benzoesäure, Carbonsäureester) zugegeben werden.

Um die Sinteraktivität zu erhöhen und trotz der geringen Packungsdichte der anorganischen Bestandteile dichte (>98% der theoretischen Enddichte) Substrate mittels Foliengießen bei niedrigen Sintertemperaturen (≤1900°C) und unter niedrigem Stickstoffpartialdruck (≤50bar) zu erhalten, wird erfindungsgemäß ein Schlicker, umfassend die organi-schen Bestandteile und $Si_3N_4$, $Y_2O_3$, $ZrO_2$ und mindestens eine Mg-Verbindung, bevorzugt ausgewählt unter MgO, Mg $(OH)_2$, und/oder MgCos eingesetzt.

In einer bevorzugten Ausgestaltung umfasst der Schlicker folgende anorganische Bestandteile:

Siliziumnitrid-Rohstoff (Mischung aus alpha- und beta-$Si_3N_4$),
0,2Ma. % bis 3,0Ma. % Magnesium Mg (berechnet als MgO),
3,0Ma. % bis 8,5Ma. % Yttrium Y (berechnet als $Y_2O_3$),
1,2Ma. % bis 4,0Ma. % Zirconium Zr (berechnet als $ZrO_2$),

Besonders bevorzugt ergeben die anorganischen Bestandteile 100%, d.h. der Schlicker enthält neben den genannten anorganischen Bestandteilen keine weiteren anorganischen Bestandteile.

Der Schlicker für den Foliengießprozess wird aus organischen und anorganischen Bestandteilen erzeugt. Die anorganischen Bestandteile, d.h. Siliziumnitrid und die Sinteradditive Mg, Y, und Zr, werden mit den organischen Bestandteilen wie z.B. Dispergatoren und/oder Weichmacher versetzt und mit mindestens einem Lösungsmittel vermischt. Der so erhaltene Schlicker wird in einer Mühle unter Verwendung von Mahlkörpern homogenisiert und deagglomeriert.

Ein Aspekt bei der Herstellung des Schlickers ist die homogene Verteilung der einzelnen Bestandteile. Um dies zu erreichen, wird in einer bevorzugten Ausgestaltung die Rohstoffmischung in einer Rührwerkskugel-, Kugel-, Attritor oder Trommelmühle, besonders bevorzugt in einer Trommelmühle gemahlen. In einer Ausgestaltung wird die Rohstoffmischung in einer Trommelmühle für 20 bis 120 Stunden, bevorzugt für 30 bis 90 Stunden, besonders bevorzugt für 40 bis 75 Stunden, bei einer Drehzahl von 15U/min bis 50U/min, bevorzugt von 20U/min bis 40U/min, besonders bevorzugt von 22U/min bis 35U/min gemahlen. In einer weiteren Ausgestaltung wird die Rohstoffmischung in einer Rührwerkskugelmühle mit einem Mahlkugelfüllgrad zwischen 70Vol.% und 90Vol.% und auf einen spezifischen Energieeintrag zwischen 0,1kWh/kg und 0,4kWh/kg gemahlen. Dadurch wird eine ausreichende Homogenität der Sinteradditive gewährleistet und eine inhomogene Verteilung der Sinteraktivität innerhalb des Grünkörpers vermieden. Auf diese Weise wird sichergestellt, dass die Eigenschaften des Sinterkörpers, wie z.B. Dichte, Festigkeit oder Temperaturleitfähigkeit, über das gesamte Bauteil vergleichbare Werte aufweisen und/oder es zu keinem Verzug während des Sintervorgangs kommt und unebene Sinterformkörper erhalten werden.

Der Schlicker wird bevorzugt vor dem Foliengießen unter Zugabe von Mahlkörpern, bevorzugt unter Zugabe von Mahlkörpern aus Keramik, besonders bevorzugt unter Zugabe von Mahlkörpern aus Siliziumnitrid und/oder Zirconiumdioxid, insbesondere bevorzugt unter Zugabe von Mahlkörpern aus Zirconiumdioxid, in einer Mühle, bevorzugt einem Attritor, und/oder einer Rührwerkskugel-, Kugel,- und/oder Trommelmühle gemahlen. Mahlkörper aus Siliciumnitrid oder Zirconiumoxid sind besonders geeignet, da sie eine hohe Bruchzähigkeit und hohe Dichte aufweisen. Die Mahlkörper bei der Mahlung in einer Trommelmühle sind bevorzugt kugel-, ei oder zylinderförmig weisen in einer kugel- und/oder eiförmigen Ausgestaltung einen mittleren Durchmesser zwischen 5mm und 25mm, bevorzugt zwischen 7,5mm und 20mm, besonders bevorzugt zwischen 10mm und 15mm auf. In einer zylindrischen Ausführungsform weisen die Mahlkörper eine Länge zwischen 8mm bis 30mm, bevorzugt zwischen 10mm bis 23mm, besonders bevorzugt zwischen 12mm bis 20mm und einen Durchmesser zwischen 5mm und 25mm, bevorzugt zwischen 7,5mm und 20mm, besonders bevorzugt zwischen 10mm und 15mm auf. Kugelförmige Mahlkörper werden unter anderem aufgrund der geringeren Gefahr von Brüchen des Mahlkörpers während des Mahlvorgangs bevorzugt. Die Mahlkörper bei der Mahlung in einer Rührwerkskugelmühle sind bevorzugt kugelförmig und weisen einen mittleren Durchmesser zwischen 0,4mm und 1,2mm, bevorzugt zwischen 0,5mm und 1,0mm, besonders bevorzugt zwischen 0,6mm und 0,9mm auf.

Bei der Verwendung von $ZrO_2$-Mahlkörper wird dafür gesorgt, dass das Zr sehr fein und homogen im Schlicker verteilt wird und dadurch die Sinteraktivität verbessert wird. In einer besonders bevorzugten Ausgestaltung des erfindungsgemäßen Siliziumnitrid-Sinterformkörpers stammt das eingebrachte Zr ausschließlich vom Abrieb der $ZrO_2$-Mahl-körper. Dadurch können trotz geringer Gründichte der anorganischen Rohstoffe Substrate mit sehr guten Eigenschaften auf Basis von Siliziumnitrid hergestellt werden.

Das Gewichtsverhältnis zwischen dem Schlicker und den Mahlkörpern liegt bei Verwendung einer Trommelmühle bevorzugt zwischen 0,3 und 0,5 besonders bevorzugt zwischen 0,35 und 0,45. Dabei liegt der Feststoffgehalt, welcher den prozentualen Anteil der anorganischen Rohstoffe im Schlicker beschreibt, zwischen 40% und 60%, bevorzugt zwischen 44% und 58%, besonders bevorzugt zwischen 48% und 54%. Dadurch wird eine für die Deagglomerierung und Homogenisierung der anorganischen und organischen Rohstoffe ausreichende Mahlwirkung erreicht. Zudem bleibt der beim Mahlen anfallende Abrieb und die Korngröße der anorganischen Bestandteile im Schlicker konstant, vorausgesetzt die eingesetzten Mahlkörper, die Mahldauer und das Verhältnis zwischen Schlicker und den Mahlkörpern bleiben konstant. Dadurch können trotz geringer Gründichte der anorganischen Rohstoffe Substrate mit sehr guten Eigenschaften auf Basis von Siliziumnitrid hergestellt werden.

Während des Mahl- bzw. Homogenisierungsvorgangs entstehen durch Abrieb der Mahlkörper und/oder Mühlenauskleidung Verunreinigungen im Schlicker. Daher gilt es in einer bevorzugten Ausgestaltung darauf zu achten, keine weiteren Verunreinigungen zu erzeugen, die den Herstellprozess der Siliziumnitrid-Sinterkörper und/oder die Eigenschaften des finalen Siliziumnitrid-Sinterkörpers negativ beeinflussen können. Kohlenstoffhaltige Werkstoffe wie Siliziumcarbid beeinflussen z.B. die Sinteraktivität der Grünfolien negativ und sorgen dafür, dass nach dem Sintern eine geringere theoretische Enddichte erzielt wird. Daher sind Siliziumcarbid-haltige Materialien zu vermeiden.

Gebräuchliche Mahlkörper aus Siliziumnitrid enthalten $Al_2O_3$ als Sinteradditiv, welches in Form von Verunreinigung aus Mahlkörperabrieb während des Sintervorgangs in das Kristallgitter der beta-Siliziumnitrid-Phase des Siliziumnitrid-Sinterkörpers eingebaut wird. Dies führt dazu, dass die Temperaturleitfähigkeit des erhaltenen Siliziumnitrid-Sinterkörpers herabgesetzt wird. Bevorzugt ist die Verwendung von Mahlkörpern, die weder den Herstellprozess noch die Eigenschaften der erfindungsgemäßen Siliziumnitrid-Sinterkörper negativ beeinträchtigen wie z.B. arteigene Siliziumnitrid-Mahlkörper. Arteigen bedeutet, dass die Mahlkörper die gleichen Additive enthalten wie die erfindungsgemäßen Siliziumnitrid-Sinterkörper. Besonders bevorzugt kommen Mahlkörper zum Einsatz die den Herstellprozess und/oder die Eigenschaften der erfindungsgemäßen Siliziumnitrid-Sinterkörper positiv beeinflussen, wie z.B. die Verwendung von Mahlkörpern aus Zirconiumdioxid. In einer besonders bevorzugten Ausgestaltung erfolgt die Zugabe von Zirconium nur als Mahlkörperabrieb, d.h. es wird der Rohstoffzusammensetzung kein Zirconium zugegeben, sondern durch Mahlkörperabrieb während der Schlickerherstellung in den Schlicker eingetragen. Der Mahlkörperabrieb von Mahlkörpern aus Zirconiumdioxid beeinflusst die Sinteraktivität des Grünkörpers positiv, da er sehr fein und so homogen wie nur möglich im Grünkörper verteilt vorliegt. Dadurch entsteht während des Sintervorgangs weniger Verzug der Sinterformkörper, was die Eigenschaften, insbesondere deren homogen Verteilung über den kompletten Sinterformkörper positiv beeinflusst. Um sicherzustellen das ausreichend Zirconiumdioxid als Mahlkörperabrieb in den Schlicker eingebracht wird, wird in einer Ausgestaltung der Schlicker in einer Rührwerkskugel-, Kugel,- oder Trommelmühle. mit zylindrischen, kugelförmigen oder eiförmigen Mahlkörper aus Zirkonoxid wie oben beschrieben gemahlen.

Aus dem Schlicker werden vorzugsweise dünne Folien, die bevorzugt eine Gründicke von 0,15 mm bis 1,5 mm aufweisen, gebildet, um entsprechende Grünteile, d.h. noch nicht gesinterte Folien, für die weitere Verarbeitung zu erhalten. Für das Foliengießen wird in einer Ausgestaltung der Schlicker in ein Reservoir auf ein Trägermaterial, bevorzugt hinter eine vorgeschaltete Rakel, dem so genannten pre-blade, gegossen. In Ziehrichtung ist eine Rakel, ein so genanntes doctor-blade angebracht. Der Spalt zwischen doctor-blade und Trägermaterial bestimmt die Dicke der gegossenen Folie. Der auf dem Trägermaterial aufgebrachte Schlicker wird dann in einer Trockenzone getrocknet und das Lösungsmittel verdampft. Auf diese Weise wird eine trockene Grünfolie auf dem Trägermaterial erhalten, die eine ausreichende Grünfestigkeit besitzt, so dass sie in diesem Zustand mechanisch bearbeitet werden kann. Beispielsweise lassen sich erforderliche Formen ausstanzen. Die so hergestellten Grünfolien werden in die gewünschte Länge und Breite gebracht und ggf. mit einem Trennmittel wie z.B. Bornitrid versehen, um gegenseitiges Anhaften zu vermeiden.

Um die Diffusionswege der anorganischen Rohstoffpartikel beim Sintervorgang möglichst kurz zu halten, weist die foliengegossenen Grünfolie in einer Ausgestaltung eine Gründichte der anorganischen Rohstoffe > 1,40 g/cm$^3$, bevorzugt > 1,45 g/cm$^3$, besonders bevorzugt > 1,50 g/cm$^3$ auf. Folien mit einer Gründichte $\leq$ 1,40 g/cm$^3$ lassen sich mit der bevorzugten Art und Menge an Sinteradditiven im beschriebenen Herstellprozess nicht mehr ausreichend, das heißt nicht auf eine theoretische Enddichte >98%, verdichten.

Nach dem Aufbringen des Trennmittels werden die Grünfolien in einen Sintertiegel gesetzt und in einen Ofen eingebracht. Dort erfolgt bevorzugt bei Temperaturen zwischen 400°C und 650°C eine erste Wärmebehandlung für 10 bis 60 Stunden, um die im Grünkörper bzw. der Grünfolie enthaltenen organischen Hilfsmittel zu entfernen. Nach der Wärmebehandlung wird der Gewichtsverlust der Grünkörper ermittelt, um sicherzustellen, dass bevorzugt >98%, besonders bevorzugt >99% der Organik entfernt wurde. Verbleiben mehr als 2% der Organik im Grünkörper wirkt sich der beim Sintervorgang entstehende Kohlenstoff negativ auf die Sinteraktivität des Grünkörpers aus.

Anschließend folgt der Sinterschritt, in dem die Grünfolien zu dichten Siliziumnitrid-Sinterkörpern gesintert werden. Bevorzugt erfolgt das Sintern als Gasdrucksintern. Das Gasdrucksintern erfolgt in einer bevorzugten Ausgestaltung bei niedrigen Stickstoffpartialdrücken zwischen 10bar und 100bar, bevorzugt zwischen 10bar und 75bar, besonders bevorzugt zwischen 10bar und 50bar und bei Temperaturen von 1800°C bis 2000°C, bevorzugt zwischen 1825°C und 1975°C, besonders bevorzugt zwischen 1850°C und 1950°C. Es ist auch möglich, die Folien mittels anderen Sinterverfahren aus dem Stand der Technik wie dem Heißpressen oder dem Heiß-Isostatische-Pressen zu sintern.

Die erfindungsgemäßen Sinterformkörper werden anschließend mittels Laserverfahren in die gewünschten Abmessungen von Länge und Breite geschnitten, abschließend erfolgt in einer bevorzugten Ausgestaltung eine Oberflächenbehandlung, um die Sinteroberflächen vom Trennmittel zu reinigen und um die Oberfläche zu ebnen. Als bevorzugte Verfahren werden dazu das Bürsten und/oder Schleifen und/oder Honen und/oder Polieren und/oder Strahlen der Oberfläche verwendet. Dadurch werden zum einen prozessbedingte Verunreinigungen auf der Oberfläche, zum anderen aus der Oberfläche ragende Siliziumnitrid-Kristallite entfernt und die Oberflächenrauheit verringert.

Um die Sinteraktivität beim Gasdrucksintern bei Stickstoffpartialdrücken zwischen 10bar und 100bar, bevorzugt zwischen 10bar und 75bar, besonders bevorzugt zwischen 10bar und 50bar und bei Temperaturen von 1800°C bis 2000°C, bevorzugt zwischen 1825°C und 1975°C, besonders bevorzugt zwischen 1850°C und 1950°C zu erhöhen, werden in einer bevorzugten Ausgestaltung die anorganischen Bestandteile der Rohstoffmischung folgender Feinheit verwendet. Eine mittlere Korngröße (d50) zwischen 0,5$\mu$m und 1,5$\mu$m und besonders bevorzugt mit geringem Grobanteil (d90) zwischen 2,5$\mu$m und 3,5$\mu$m. In diesem Bereich weisen die anorganischen Bestandteile eine ausreichende Feinheit auf, um beim Sintern im Wesentlichen in der Flüssigphase gelöst zu werden. Dadurch wird der Sinterprozess beschleunigt. Eine geringe mittlere Korngröße (<0,5$\mu$m) der Rohstoffmischung führt dazu, dass ein erhöhter Anteil an organischen Hilfsmitteln benötigt wird, um den Foliengießschlicker zu stabilisieren. Dies führt zu einer geringeren Gründichte in Bezug auf die anorganischen Bestandteile der Rohstoffmischung. Die Sinteraktivität der Rohstoffmischung wird negativ beeinflusst und eine theoretische Enddichte <98% realisiert. Eine mittlere Korngröße der Rohstoffmischung >1,5$\mu$m führt zu einer geringeren Sinteraktivität, da die Rohstoffbestandteile langsamer in der Flüssigphase gelöst werden. Dadurch wird bei den gewählten Sinterbedingungen lediglich eine theoretische Enddichte < 98% beobachtet.

Der erfindungsgemäße Sinterformkörper findet als elektrisch isolierender Substratkörper z. B. im Bereich der Leistungselektronik Anwendung, da er eine hohe Temperaturleitfähigkeit >20mm^2/s und einen hohen elektrischen Durchgangswiderstand >1,0$\times$1014$\Omega$cm bei 25°C und 1000V sowie >1,1$\times$1013$\Omega$cm bei 250°C und 1000V, und eine elektrische Durchschlagsfestigkeit >18 kV/mm aufweist. Aufgrund der hohen Biegefestigkeit >550MPa, bevorzugt >600MPa, besonders bevorzugt >640MPa des erfindungsgemäßen Sinterformkörpers aus Siliziumnitrid können aus diesem Sinterformkörper dünnere Substrate hergestellt werden als bei der Verwendung anderer keramischer Werkstoffen wie z.B. AIN oder $Al_2O_3$. Dies ermöglicht eine Gewichtsreduktion des leistungselektronischen Bauteils und eine Verringerung des thermischen Widerstands.

Die sehr gute Temperaturwechselbeständigkeit des erfindungsgemäßen Sinterformkörpers ermöglicht zudem eine längere Lebensdauer der daraus gefertigten Leistungselektronikkomponenten.

Im Folgenden werden der erfindungsgemäße Sinterformkörper sowie seine Herstellung und Verwendung an Beispielen näher erläutert. Beispiel Nr. 2 dient als Negativbeispiel.

Tabelle 1: Ausgewählte Prozessparameter und Eigenschaften der Ausführungsbeispiele

| Nr. | ZrO$_2$-Zugabe | ZrO$_2$-Gehalt [Ma%] | Formgebung | Gründichte [g/cm$^3$] | Theoretische Enddichte [%] | Festigkeit [MPa] | Temperaturleitfähigkeit [mm^2/s] |
|-----|----------------|----------------------|------------|------------------------|-----------------------------|------------------|-----------------------------------|
| 1 | Einwaage | 1,4 | Pressen | 1,79 | 101,0 | 645 | 38,84 |
| 2 | Einwaage | 1,4 | Foliengießen | 1,46 | 97,1 | 505 | 33,59 |
| 3 | Abrieb | 1,35 | Foliengießen | 1,49 | 100,3 | 756 | 30,55 |
| 4 | Abrieb | 2,22 | Foliengießen | n.b. | 100,5 | 682 | 30,3 |
| 5 | Abrieb | 3,59 | Foliengießen | n.b. | 99,5 | 710 | 30,58 |

Zur Herstellung der in Tabelle 1 gezeigten Beispiele wurden als Sinteradditive verwendet: Yttriumoxid (Y$_2$O$_3$) mit einer Reinheit >99,0Ma. % Y$_2$O$_3$, einer spezifischen Oberfläche zwischen 10,0m$^2$/g und 16,0m$^2$/g, einer mittleren Korngröße d50 zwischen 0,6μm und 0,9μm, sowie einer Kornbreitenverteilung (d90-d10/d50) zwischen 0,5 und 3,0, Magnesiumoxid (MgO) mit einer Reinheit >99,5Ma. % MgO und einer spezifischen Oberfläche zwischen 5,0m$^2$/g und 9,0m$^2$/g und Zirconiumdioxid (ZrO$_2$) mit einer spezifischen Oberfläche zwischen 11,0m$^2$/g und 17,0m$^2$/g und einer mittleren Korngröße zwischen 0,03μm und 0,05μm. Der verwendete Siliziumnitrid-Rohstoff weist eine mittlere Korngröße d50 zwischen 1,5μm und 1,9μm, sowie eine Kornbreitenverteilung (d90-d10)/d50 zwischen 1,9 und 2,8, eine spezifische Oberfläche zwischen 4,0m$^2$/g und 5,0m$^2$/g, eine Reinheit >98,5Ma. % Si$_3$N$_4$ und einem α-Si$_3$N$_4$-Gehalt >85Ma. % auf. Dabei beläuft sich der Sauerstoffgehalt im Siliziumnitrid-Rohstoff auf <1,0Ma. % und der Al-Gehalt <0,1 Ma. % um den Verlust der Temperaturleitfähigkeit durch Verunreinigungen im Siliziumnitrid-Rohstoff zu begrenzen.

Zur Herstellung der in Tabelle 1 gezeigten Beispiele wurde 0,2 Ma. % bis 3,0Ma. % MgO, 3,0Ma. % bis 8,5Ma. % Y$_2$O$_3$ und 1,2Ma. % bis 4,0Ma. % ZrO2 als Sinteradditive verwendet,. Die Mengenangabe der Sinteradditive beziehen sich auf 100Ma. % der anorganischen Rohstoffe, der verbleibende Teil bis 100Ma. % der anorganischen Rohstoffe wird mit Si$_3$N$_4$-Rohstoff aufgefüllt.

Zur Herstellung von Beispiel Nr. 1 aus Tabelle 1 wurden die anorganischen Rohstoffe in Wasser unter Verwendung von Tetraethylammonium Hydroxid als Dispergator in einer Rührwerkskugelmühle oder einem Attritor und mit Hilfe von Si$_3$N$_4$ Mahlkörpern, dispergiert und deagglomeriert um einen homogenen Schlicker mit einem Feststoffgehalt zwischen 48 und 54 % herzustellen. Dem Schlicker wurden zwischen 6Ma. % und 10Ma. % organische Hilfsstoffe (Presshilfsmittel, Binder, Plastifizierer) zugegeben. Anschließend wurde der Schlicker in einem Sprühturm bei Temperaturen zwischen 200°C und 260°C getrocknet und ein zum Axialpressen geeignetes Sprühgranulat hergestellt. Das Sprühgranulat wurde in eine Pressform gegeben und bei 1250bar bis 2500bar zu einem Grünkörper mit einer Gründichte der anorganischen Rohstoffe von 1,79 $\pm$ 0,01g/cm$^3$ verpresst.

Zur Herstellung der Beispiele 2 bis 5 aus Tabelle 1 wurden die anorganischen Rohstoffe in 35Ma. % bis 40Ma. % eines organischen Lösemittelgemisches aus Aromat/Alkohol, in diesem Fall Toluol/Ethanol unter Verwendung von 0,7Ma. % bis 1,00Ma. % eines Dispergators, in diesem Fall ein Fettsäureester, zusammen mit 7,0Ma. % bis 8,0Ma. % des organischen Bindemittels bestehend aus Polyvinylbutyralen in einer Trommelmühle homogenisiert und deagglomeriert. Dabei kann das Lösemittelgemisch bis zu 2,5Ma. % Wasser enthalten. Bei Beispiel Nr. 2 aus Tabelle 1 wurden Mahlkörper aus Al$_2$O$_3$, für die Beispiele 3 bis 5 wurden ZrO$_2$-Mahlkörper für die Homogenisierung verwendet, der ZrO$_2$-Gehalt der beiden Beispiele resultiert aus dem Mahlkörperabrieb, es wurde kein weiteres ZrO$_2$ als pulverförmiger Rohstoff zugemischt. Die Menge an ZrO$_2$ wurde an den Sinterformkörpern durch Röntgenfluoreszenzanalysen nach DIN-ISO12677 ermittelt. Aus dem Schlicker wurden dünne Folien mit eine Gründicke von ca. 0,4mm gegossen. Die Gründichte der anorganischen Rohstoffe lag hierbei zwischen 1,45g/cm$^3$ und 1,50g/cm$^3$. Die Grünfolien wurden nach dem Abtrocknen des Lösemittels in Form gestanzt, mit einem Trennmittel wie z.B. Bornitrid versehen und stapelweise in die Sintertiegel gesetzt.

Um die organischen Hilfsstoffe aus den beispielsgemäß hergestellten Grünkörpern zu entfernen, wurde eine erste Wärmebehandlung, das so genannte Entbindern, zwischen 500 und 600 °C für 20 bis 40 Stunden durchgeführt. Anschließend wurde der Gewichtsverlust der Grünkörper ermittelt, um sicherzustellen, dass > 98% der Organik entfernt wurde. Verbleibt mehr Organik in den Grünkörpern, führt das zu einer verminderten Sinteraktivität der Grünkörper, da die während des Sinterns in Kohlenstoff umgewandelten organischen Hilfsstoffe das Flüssigphasensintern von Werkstoffen auf Basis von Siliziumnitrid negativ beeinflussen.

Nach der ersten Wärmebehandlung folgt das Sintern der Grünkörper. Dabei wurden diese bei Temperaturen zwischen 1850°C und 2000°C für 1,5 bis 5 Stunden unter einem Druck von 10bar bis 100bar Stickstoff gesintert. Nach dem Abkühlen wurden die gesinterten Substrate aus den Sintertiegeln entnommen, gereinigt und mittels Laserverfahren in die gewünschten Abmessungen von Länge und Breite geschnitten. Abschließend erfolgte als finaler Prozessschritt eine Oberflächenbehandlung mit diamantbesetzten Polyamid Fasern in einem Bürst-Verfahren.

Sinterformkörper nach Beispiel Nr. 1 wurden nach dem Sintern durch Schleifen zu Biegebruchstäbchen und Probenkörper zur Messung der Temperaturleitfähigkeit weiterverarbeitet

Betrachtet man die Ergebnisse in Tabelle 1 so wird deutlich, dass die Gründichte der anorganischen Rohstoffe nach dem beschriebenen Foliengießprozess (Beispiel Nr. 2 und 3) geringer ausfällt als bei axial gepressten Proben aus Beispiel 1. Durch die längeren Diffusionswege bei foliengegossenen Bauteilen ist die Sinteraktivität geringer und bei gleicher Zusammensetzung zeigen die foliengegossenen Bauteile eine geringere theoretische Enddichte nach dem Sintern. Eine geringere theoretische Enddichte führt dazu, dass die via Foliengießen hergestellten Substrate, bei gleicher anorganischer Zusammensetzung und vergleichbaren Sinterbedingungen, eine geringere Festigkeit aufweisen.

Dies kann durch die Zugabe von Mg, Zr und Y ausgeglichen werden. Bei der Verwendung von $ZrO_2$-Mahlkörpern wird zusätzlich dafür gesorgt, dass Zr sehr fein und homogen im Schlicker verteilt wird und dadurch die Sinteraktivität verbessert wird. In einer besonders bevorzugten Ausgestaltung des erfindungsgemäßen Siliziumnitird-Sinterformkörpers stammt das eingebrachte Zr ausschließlich vom Abrieb der $ZrO_2$-Mahlkörper. Dadurch können trotz geringer Gründichte der anorganischen Rohstoffe Substrate mit sehr guten Eigenschaften auf Basis von Siliziumnitrid hergestellt werden.

**Patentansprüche**

1. Sinterformkörper auf der Basis von Siliziumnitrid, umfassend Siliziumnitrid (beta-$Si_3N_4$), und

   0,2Ma. % bis 3,0Ma. % Magnesium Mg (berechnet als MgO in Bezug auf die Gesamtmasse des Sinterformkörpers),
   3,0Ma. % bis 8,5Ma. % Yttrium Y (berechnet als $Y_2O_3$ in Bezug auf die Gesamtmasse des Sinterformkörpers) und
   1,2Ma. % bis 4,0Ma. % Zirconium Zr (berechnet als $ZrO_2$ in Bezug auf die Gesamtmasse des Sinterformkörpers).

2. Sinterformkörper nach Anspruch 1, **dadurch gekennzeichnet, dass** die Massen von Siliziumnitrid, Yttrium, Magnesium und Zirconium 100 Ma. % ergeben.

3. Sinterformkörper nach Anspruch 1 oder 2, **dadurch gekennzeichnet, dass** der Sinterformkörper 0,25Ma. % bis 0,3Ma. % Magnesium, 7,5Ma. % bis 8,0Ma. % Yttrium und 1,4Ma. % bis 3,5 Ma. % Zirconium umfasst.

4. Sinterformkörper nach einem der Ansprüche 1 oder 2, **dadurch gekennzeichnet, dass** der Sinterformkörper 1,75Ma. % bis 2,5Ma. % Magnesium, 3,0Ma. % bis 4,0Ma. % Yttrium und 1,3Ma. % bis 3,0Ma. % Zirconium, umfasst

5. Sinterformkörper nach einem der vorstehenden Ansprüche, **dadurch gekennzeichnet, dass** das Ma. %-Verhältnis von Mg + Zr / Y zwischen 0,3 und 2,0, bevorzugt zwischen 0,4 und 1,75, besonders bevorzugt zwischen 0,5 und 1,5 liegt.

6. Sinterformkörper nach einem der vorstehenden Ansprüche, **dadurch gekennzeichnet, dass** der Sinterformkörper eine Enddichte >98,0%, bevorzugt >98,5%, besonders bevorzugt >99,0% der theoretischen Enddichte aufweist.

7. Sinterformkörper nach einem der vorstehenden Ansprüche, **dadurch gekennzeichnet, dass** der Sinterformkörper eine Festigkeit >550MPa, bevorzugt >600MPa, besonders bevorzugt >640MPa aufweist und/oder der Sinterformkörper eine Temperaturleitfähigkeit >20mm^2/s, bevorzugt >25 mm^2/s, besonders bevorzugt >30mm^2/s aufweist.

8. Verfahren zur Herstellung eines Sinterformkörpers auf der Basis von Siliziumnitrid, umfassend Siliziumnitrid (beta-$Si_3N_4$), Yttrium (Y), Magnesium (Mg) und Zirconium (Zr), bevorzugt zur Herstellung eines Sinterformkörper nach einem der Ansprüche 1-8, **dadurch gekennzeichnet, dass** der Sinterformkörper über ein Foliengießverfahren hergestellt wird.

9. Verfahren zur Herstellung eines Sinterformkörpers nach Anspruch 8, wobei für das Foliengießverfahren ein Schlicker umfassend $Si_3N_4$, $Y_2O_3$, $ZrO_2$ und mindestens eine Mg-Verbindung, bevorzugt ausgewählt unter MgO, Mg $(OH)_2$, und/oder $MgCO_s$ eingesetzt wird.

10. Verfahren nach Anspruch 8, wobei der Schlicker zusätzlich mindestens ein Lösungsmittel bevorzugt, mindestens ein organisches Lösungsmittel, und/oder mindestens einen Dispergator und/oder mindestens ein Bindemittel, bevorzugt mindestens ein organisches Bindemittel, umfasst.

11. Verfahren nach einem der Ansprüche 8 bis 10, wobei der Schlicker vor dem Foliengießen unter Zugabe von Mahlkörper, bevorzugt unter Zugabe von Mahlkörper aus Keramik, besonders bevorzugt unter Zugabe von Mahlkugel aus Siliziumnitrid und/oder Zirconiumdioxid, insbesondere bevorzugt unter Zugabe von Mahlkörper aus Zirconiumdioxid, in einem Attritor, einer Rührwerkskugel-, Kugel,- oder Trommelmühle gemahlen wird.

12. Verfahren gemäß Anspruch 8, **dadurch gekennzeichnet, dass** das Zirconium als Mahlkörperabrieb in den Schlicker eingebracht wird.

13. Verfahren zur Herstellung eines Sinterformkörpers gemäß einem der Ansprüche 8 bis 12, **dadurch gekennzeichnet, dass** der Grünkörper des Foliengießverfahrens eine Gründichte der anorganischen Rohstoffe > 1,40 g/cm$^3$, bevorzugt > 1,45 g/cm$^3$, besonders bevorzugt > 1,50 g/cm$^3$ aufweist.

14. Verwendung eines Sinterformkörpers nach einem der Ansprüche 1 bis 7 als elektrisch isolierender Substratkörper in der Leistungselektronik.

Europäisches
Patentamt

European
Patent Office

Office européen
des brevets

**EUROPÄISCHER RECHERCHENBERICHT**

Nummer der Anmeldung

**EP 23 20 9141**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/371963 A1 (LEE SEUNG YEON [KR] ET AL) 24. November 2022 (2022-11-24) * Absatz [0002]; Ansprüche; Abbildung 1 * ----- | 1-14 | INV. C04B35/593 C04B35/626 C04B35/634 |
| X | KR 2019 0032966 A (LG CHEMICAL LTD [KR]) 28. März 2019 (2019-03-28) * Absatz [0084]; Beispiel 1 * ----- | 1-14 | |
| X | US 2020/165167 A1 (KIM JUNGYU [KR] ET AL) 28. Mai 2020 (2020-05-28) * Ansprüche; Beispiele; Tabelle 1 * ----- | 1-14 | |
| X | US 4 560 669 A (MATSUHIRO KEIJI [JP] ET AL) 24. Dezember 1985 (1985-12-24) | 1,2,5-7 | |
| A | * Vergleichsprobe 17 in Tabelle 1 und Probe 32 in Tabelle 3 * ----- | 3,4,8-14 | |
| X | US 5 217 931 A (TAKAMI AKIHIDE [JP] ET AL) 8. Juni 1993 (1993-06-08) | 1,5,7 | |
| A | * Proben 9 und 10 in Tablelle 1 * ----- | 2-4,6, 8-14 | RECHERCHIERTE SACHGEBIETE (IPC) |
| X | US 5 015 608 A (MATSUHISA TADAAKI [JP] ET AL) 14. Mai 1991 (1991-05-14) | 1,2,4,5, 7 | C04B |
| A | * Beispiele 8 und 9 (Proben 11 und 12) in Tabelle 2; Anspruch 1 * ----- | 3,6,8-14 | |

Der vorliegende Recherchenbericht wurde für alle Patentansprüche erstellt

| Recherchenort | Abschlußdatum der Recherche | Prüfer |
|---|---|---|
| **München** | **25. April 2024** | **Munro, Brian** |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 23 20 9141**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**25-04-2024**

| Im Recherchenbericht angeführtes Patentdokument | Datum der Veröffentlichung | Mitglied(er) der Patentfamilie | Datum der Veröffentlichung |
|---|---|---|---|
| US 2022371963 A1 | 24-11-2022 | CN 114423723 A | 29-04-2022 |
| | | EP 4032700 A1 | 27-07-2022 |
| | | JP 7377961 B2 | 10-11-2023 |
| | | JP 2022550701 A | 05-12-2022 |
| | | KR 20210035356 A | 01-04-2021 |
| | | US 2022371963 A1 | 24-11-2022 |
| | | WO 2021054788 A1 | 25-03-2021 |
| KR 20190032966 A | 28-03-2019 | KEINE | |
| US 2020165167 A1 | 28-05-2020 | CN 111051267 A | 21-04-2020 |
| | | JP 6942929 B2 | 29-09-2021 |
| | | JP 2020528861 A | 01-10-2020 |
| | | KR 20190033021 A | 28-03-2019 |
| | | US 2020165167 A1 | 28-05-2020 |
| US 4560669 A | 24-12-1985 | CA 1207804 A | 15-07-1986 |
| | | EP 0139793 A1 | 08-05-1985 |
| | | JP S6054976 A | 29-03-1985 |
| | | JP S6125677 B2 | 17-06-1986 |
| | | US 4560669 A | 24-12-1985 |
| US 5217931 A | 08-06-1993 | KEINE | |
| US 5015608 A | 14-05-1991 | DE 3743625 A1 | 28-07-1988 |
| | | JP H0774103 B2 | 09-08-1995 |
| | | JP S63166763 A | 09-07-1988 |
| | | SE 465318 B | 26-08-1991 |
| | | US 5015608 A | 14-05-1991 |

EPO FORM P0461

Für nähere Einzelheiten zu diesem Anhang : siehe Amtsblatt des Europäischen Patentamts, Nr.12/82